# EUROPÄISCHE PATENTSCHRIFT

(11) **EP 3 842 788 B1**
(45) Veröffentlichungstag und Bekanntmachung des Hinweises auf die Patenterteilung: **26.06.2024**
(21) Anmeldenummer: 20216124.6
(22) Anmeldetag: 21.12.2020
(51) Int. Cl.: G01N 21/27, G01N 21/359, G01J 3/00, G01J 3/28, G01J 3/02, G06N 20/10, G06V 10/143, G06V 10/32, G06V 10/77, G01N 21/84

(54) **NAH-INFRAROT-SPEKTRALSENSOR ZUR OBJEKTERKENNUNG MITTELS MASCHINENLERNVERFAHREN, UND ENTSPRECHENDES VERFAHREN**
NEAR INFRARED SPECTRAL SENSOR FOR OBJECT RECOGNITION USING MACHINE LEARNING METHODS, AND CORRESPONDING METHOD
CAPTEUR SPECTRAL PROCHE INFRAROUGE DE RECONNAISSANCE D'OBJETS UTILISANT DES MÉTHODES D'APPRENTISSAGE AUTOMATIQUE, ET MÉTHODE CORRESPONDANTE

(30) Priorität: 23.12.2019 EP 19219289
(43) Veröffentlichungstag der Anmeldung: 30.06.2021
(73) Patentinhaber: SICK AG, 79183 Waldkirch/Breisgau (DE)
(72) Erfinder: Jarvis, Jan, 79104 Freiburg (DE); Albrecht, Roland, 79312 Emmendingen (DE); Eble, Johannes, 79183 Waldkirch (DE)
(74) Vertreter: Manitz Finsterwald Patent- und Rechtsanwaltspartnerschaft mbB

(56) Entgegenhaltungen:
- CN-A- 109 211 803
- ELMASRY G ET AL: "Detecting chilling injury in Red Delicious apple using hyperspectral imaging and neural networks", POSTHARVEST BIOLOGY AND TECHNOLOGY, ELSEVIER, AMSTERDAM, NL, Bd. 52, Nr. 1, 1. April 2009 (2009-04-01), Seiten 1-8, XP025927885, ISSN: 0925-5214, DOI: 10.1016/J.POSTHARVBIO.2008.11.008 [gefunden am 2009-01-06]
- DELIA LORENTE ET AL: "Selection of Optimal Wavelength Features for Decay Detection in Citrus Fruit Using the ROC Curve and Neural Networks", FOOD AND BIOPROCESS TECHNOLOGY ; AN INTERNATIONAL JOURNAL, SPRINGER-VERLAG, NEW YORK, Bd. 6, Nr. 2, 2. Dezember 2011 (2011-12-02), Seiten 530-541, XP035165510, ISSN: 1935-5149, DOI: 10.1007/S11947-011-0737-X
- LI JIANGBO ET AL: "Fast detection and visualization of early decay in citrus using Vis-NIR hyperspectral imaging", COMPUTERS AND ELECTRONICS IN AGRICULTURE, ELSEVIER, AMSTERDAM, NL, Bd. 127, 27. Juli 2016 (2016-07-27), Seiten 582-592, XP029709564, ISSN: 0168-1699, DOI: 10.1016/J.COMPAG.2016.07.016

## Beschreibung

Die vorliegende Erfindung betrifft einen Spektralsensor für die Nahinfrarotspektroskopie, welcher zur Unterscheidung und/oder Erkennung von Objekten und/oder Materialien dient.

Spektralsensoren, d.h. beispielsweise Spektroskope oder Spektrometer, können eingesetzt werden um Objekte und/oder Materialien anhand ihrer spektralen Eigenschaften zu erkennen. So unterscheiden sich üblicherweise Materialien in den von ihnen absorbierten Wellenlängen und können auf diese Weise voneinander unterschieden werden. Dies wird beispielsweise auch in Industrieprozessen eingesetzt, um Objekte zu unterscheiden bzw. anhand ihres Materials zu erkennen. Hierbei werden häufig Spektralsensoren verwendet, die im Nahinfrarotbereich (NIR) arbeiten, d.h. bei Wellenlängen z.B. im Bereich zwischen 800 und 2500 nm. Insbesondere im industriellen Bereich ist die Geschwindigkeit der Sensoren entscheidend, wobei möglichst schnell ein Ergebnis vorliegen soll, welches Objekt oder Material gerade von dem Sensor erfasst wird. Zudem muss im industriellen Bereich die Integration des Spektralsensors möglichst schnell und mit geringem Aufwand in bestehende Prozesse erfolgen können.

Aus ElMasry G et al. - "Detecting chilling injury in Red Delicious apple using hyperspectral imaging and neural networks", Postharvest Biology and Technology, Vol. 52, Issue 1, April 2009, pages 1-8 und aus Delia Lorente et al - "Selection of Optimal Wavelength Features for Decay Detection in Citrus Fruit Using the ROC Curve and Neural Networks", Food and Bioprocess Technology, 6(2), pages 530-541 sind Vorrichtungen gemäß dem Oberbegriff des Anspruchs 1 bekannt, mit denen hyperspektrale Bilder von Früchten aufgenommen werden. Aus den Bildern werden dann mittels Maschinenlernverfahren relevante Wellenlängen oder Merkmale für die Erkennung von Defekten an den Früchten bestimmt.

Die CN109211803A beschreibt die Erkennung von Mikroplastik mittels Spektroskopie.

Schließlich ist es aus Li Jiangbo et al - "Fast detection and visualization of early decay in citrus using Vis-NIR hyperspectral imaging", Computers and Electronics in Agriculture 127 (2016), pages 582-592 bekannt, mittels Hauptkomponentenanalyse relevante Wellenlängen zur Bestimmung von Pilzbefall zu ermitteln.

Es ist die der Erfindung zugrunde liegende Aufgabe, einen Spektralsensor anzugeben, welcher gut für industrielle Prozesse geeignet ist.

Diese Aufgabe wird durch einen Spektralsensor mit den Merkmalen des Anspruchs 1 gelöst.

Insbesondere ist der Spektralsensor ausgebildet in einem Lernmodus und in einem Betriebsmodus zu arbeiten. In dem Lernmodus führt der Spektralsensor ein oder mehrere Messungen von Intensitätswerten eines ersten Spektrums von Wellenlängen (Stützpunkte) durch. Im Betriebsmodus hingegen führt der Spektralsensor zumindest eine Messung von Intensitätswerten eines zweiten Spektrums von Wellenlängen durch, wobei das zweite Spektrum vollständig in dem ersten Spektrum enthalten ist aber weniger Wellenlängen (Stützpunkte) umfasst, als das erste Spektrum. Zudem ist der Spektralsensor beispielsweise ausgebildet, selbst die Wellenlängen des zweiten Spektrums zu bestimmen, wobei der Spektralsensor weiterhin ausgebildet ist, die Wellenlängen des zweiten Spektrums unter Zuhilfenahme eines Maschinenlernverfahrens auszuwählen.

Eine Messung bei einer Wellenlänge kann auch als Stützpunkt bezeichnet werden. Im Betriebsmodus werden für das zweite Spektrum insbesondere weniger Stützpunkte erzeugt oder gemessen als für das erste Spektrum im Lernmodus.

Im Lernmodus erfasst der Spektralsensor also deutlich mehr Informationen bei einer Messung, da im Lernmodus bei einer jeweiligen Messung ein größeres und/oder höher aufgelöstes Spektrum, d.h. das erste Spektrum, gemessen wird. Im Lernmodus können beispielsweise jeweils mehrere Messungen von verschiedenen Objekten und/oder Materialien vorgenommen werden, welche später dann im Betriebsmodus auch unterschieden werden sollen. So können im Lernmodus beispielsweise fünf Messungen eines ersten Materials, anschließend fünf Messungen eines zweiten Materials usw. vorgenommen werden.

Anschließend kann der Spektralsensor aus den Messungen im Lernmodus dann die Wellenlängen bestimmen, die im Betriebsmodus noch gemessen werden sollen. Die so bestimmten Wellenlängen bilden das zweite Spektrum, wobei das zweite Spektrum insbesondere kein kontinuierliches Spektrum ist, sondern bevorzugt eine Reihe von einzelnen Wellenlängen umfasst (d.h. aus nicht äquidistanten Stützpunkten besteht). Dadurch, dass das zweite Spektrum weniger Wellenlängen umfasst als das erste Spektrum, kann die Messung eines Objekts im Betriebsmodus deutlich schneller erfolgen, als im Lernmodus. Hierdurch kann wiederum der Durchsatz bei industriellen Anwendungen gesteigert werden. Es hat sich zudem herausgestellt, dass der Verzicht auf die Messung eines vollen Spektrums, wie dies beispielsweise im Lernmodus der Fall sein kann, nicht zu Einbußen in der Genauigkeit bei der Unterscheidung und/oder Erkennung von Objekten führt. Dies liegt daran, dass große Anteile des ersten Spektrums häufig keine relevanten Informationen über das Objekt bzw. das jeweilige Material besitzen.

Erfindungsgemäß ist der Spektralsensor ausgebildet, selbst die Wellenlängen des zweiten Spektrums zu bestimmen. Insbesondere kann der Spektralsensor die Wellenlängen des zweiten Spektrums vollständig selbst bestimmen und ist dementsprechend nicht auf externe Recheneinrichtungen oder dergleichen angewiesen. Hierdurch ist es beispielsweise möglich, den Spektralsensor bereits an seinem Einsatzort in einen Prozess zu integrieren und dann, ohne weitere Änderungen, zunächst den Lernmodus auszuführen und schließlich für den Produktivbetrieb in den Betriebsmodus zu wechseln. Die Integration in Industrieprozesse wird auf diese Weise stark vereinfacht.

Die Wellenlängen des zweiten Spektrums werden dabei unter Zuhilfenahme eines Maschinenlernverfahrens ausgewählt. Es wird sich also einer sogenannten "Künstlichen Intelligenz" bedient, um für den jeweiligen Anwendungsfall die passenden Wellenlängen des zweiten Spektrums auszuwählen. Das Maschinenlernverfahren (samt des Trainings) kann insbesondere vollständig automatisch erfolgen, wodurch ein Eingriff eines Bedieners in das Maschinenlernverfahren nicht notwendig ist. Eine Zeit, die bis zur vollständigen Integration des Spektralsensors in den Industrieprozess benötigt wird, wird durch den automatischen Ablauf des Maschinenlernverfahrens verkürzt.

Alternativ kann die Bestimmung der Wellenlängen des zweiten Spektrums auch von einer externen Recheneinrichtung (z.B. Server) unterstützt werden, sodass der Spektralsensor nur einen Teil der für die Bestimmung der Wellenlängen des zweiten Spektrums notwendigen Rechenleistung zur Verfügung stellen muss. Beispielsweise kann das nachfolgend noch genauer erläuterte Training für das Maschinenlernverfahren zumindest zum Teil von der externen Recheneinrichtung durchgeführt werden.

Erfindungsgemäß umfasst der Spektralsensor selbst eine Recheneinrichtung, welche die für die Bestimmung der Wellenlängen des zweiten Spektrums notwendigen Schritte ausführt. Die Recheneinrichtung kann teilweise oder vollständig das Maschinenlernverfahren ausführen. Die Recheneinrichtung kann außerdem den Betrieb des Spektralsensors durchführen und insbesondere den Lernmodus und den Betriebsmodus ermöglichen.

Zudem weist der Spektralsensor einen Photosensor zur Erfassung der verschiedenen Wellenlängen des ersten und zweiten Spektrums auf. Die Recheneinrichtung und der Photosensor können bevorzugt im selben Gehäuse angeordnet sein, wobei es sich bei dem Spektralsensor insbesondere um einen miniaturisierten Sensor für Industrieprozesse handeln kann. Eine maximale Abmessung des Spektralsensors in seiner größten Erstreckung in einer Raumrichtung kann beispielsweise bis zu 10 cm betragen. Innerhalb des Gehäuses kann die vollständige oder zumindest überwiegende Rechenleistung zur Auswahl der Wellenlängen des zweiten Spektrums erbracht werden.

Der Spektralsensor kann insbesondere ein Fabry-Pérot-Interferometer (FPI) umfassen. Alternativ oder zusätzlich kann der Spektralsensor ein Mehrkanalsystem und/oder ein Digital Micromirror Device (DMD) mit einem optischen Beugungsgitter umfassen. Der Spektralsensor kann tastend, im Durchlicht und/oder mit Reflektor betrieben werden. Der Spektralsensor umfasst erfindungsgemäß eine Lichtquelle oder mehrere Lichtquellen zur Beleuchtung des zu messenden Objekts und/oder Materials. Neben Spektren im Nahinfrarotbereich kann der Spektralsensor auch für den mittleren und fernen Infrarotbereich (MIR/FIR) oder auch für den sichtbaren Wellenlängenbereich ausgebildet sein.

Vorteilhafte Weiterbildungen der Erfindung sind der Beschreibung, den Unteransprüchen sowie den Figuren zu entnehmen.

Gemäß einer ersten Ausführungsform umfasst der Spektralsensor eine Maschinenlerneinheit und ist ausgebildet, das Maschinenlernverfahren mittels der Maschinenlerneinheit durchzuführen. Die Maschinenlerneinheit kann insbesondere von der vorstehend genannten Recheneinrichtung des Spektralsensors umfasst und/oder ausgeführt werden. Die Maschinenlerneinheit kann insbesondere auch ein Teil einer Firmware des Spektralsensors sein.

Gemäß einer weiteren Ausführungsform weist die Maschinenlerneinheit einen Klassifikator auf, wobei der Klassifikator bevorzugt ein neuronales Netz und/oder eine Support Vector Machine (SVM) umfasst. Bei dem neuronalen Netz kann es sich beispielsweise um ein künstliches neuronales Netz handeln, welches darauf trainiert wird, Objekte und/oder Materialien voneinander zu unterscheiden. Das Training des neuronalen Netzes kann unter der Randbedingungen stattfinden, möglichst wenige Wellenlängen (d.h. Stützstellen) zur Unterscheidung der Objekte/Materialien zu verwenden. Dieselbe Aufgabe kann auch von der SVM durchgeführt werden. Bei einer SVM werden relativ wenige Trainingsdaten benötigt, um verschiedene Objekte bzw. Materialien voneinander zu unterscheiden.

Das künstliche neuronale Netz kann insbesondere aus in mehreren Schichten angeordneten Knoten aufgebaut sein, wobei die Knoten durch Verbindungen miteinander verknüpft sind. Die Knoten können unterschiedliche Gewichtungen bzw. Gewichte aufweisen, die über die Verbindungen von anderen Knoten eingehende Werte gewichten. Das künstliche neuronale Netz kann beispielsweise eine Eingangsschicht und eine Ausgangsschicht aufweisen, wobei zwischen der Eingangs- und der Ausgangsschicht ein oder mehrere versteckte Schichten (sogenannte "Hidden Layer") angeordnet sein können.

Gemäß einer weiteren Ausführungsform weist die Maschinenlerneinheit einen Gatingfilter auf, welcher die Messungen von Intensitätswerten als Messwerte an den Klassifikator weiterleitet, wobei vor dem Weiterleiten ein Gewichten und/oder Ausblenden von Intensitätswerten durch Filterkoeffizienten des Gatingfilters erfolgt. Dem Gatingfilter können die durch den Photosensor erfassten Intensitätswerte zugeführt werden. Durch den Gatingfilter ist es also möglich, eine Gewichtung von Intensitätswerten von bestimmten Wellenlängen aus dem ersten und/oder zweiten Spektrum vorzunehmen. Die Gewichtung ist um so stärker, je relevanter eine Wellenlänge für die Unterscheidung der verschiedenen Objekte/Materialien ist. Weniger wichtige Wellenlängen werden geringer gewichtet oder durch eine Gewichtung mit dem Faktor "0" ausgeblendet.

Gemäß einer Ausführungsform ist der Spektralsensor ausgebildet, im Lernmodus bekannte Objekte zu messen und aus den Messungen der bekannten Objekte das zweite Spektrum zu bestimmen. Der Spektralsensor kann insbesondere jeweils eine oder mehrere Messungen desselben Objekts (oder auch gleichartiger Objekte) durchführen. Im Lernmodus kann hierfür der gesamte spektrale Bereich gemessen werden über welchen der Spektralsensor verfügt. Dieser gesamte spektrale Bereich wird in diesem Fall dann als erstes Spektrum bezeichnet.

Das erste Spektrum ist bevorzugt ein kontinuierliches Spektrum und kann sich beispielsweise von 1550-1950 nm erstrecken. Insbesondere kann der Spektralsensor ausgebildet sein, um beispielsweise einen Abstand zwischen zwei Messpunkten von 5 nm aufzuweisen und dementsprechend bei dem genannten Spektralbereich 81 Messpunkte aufzunehmen. Die spektrale Breite über welche für jeden Messpunkt integriert wird, kann beispielsweise im Bereich von 13-16 nm liegen. Allgemein kann der Abstand zwischen zwei Messpunkten kleiner oder gleich 10 oder 5 nm sein. Die spektrale Breite kann zwischen 1 und 30 nm, bevorzugt zwischen 10 und 20 nm und besonders bevorzugt zwischen 13 und 16 nm liegen.

Das zweite Spektrum wird aus den Messungen der bekannten Objekte bevorzugt derart bestimmt, dass eine Unterscheidung der bekannten Objekte möglichst gut realisiert wird, wie hierin noch genauer beschrieben.

Es soll darauf hingewiesen werden, dass hierin der einfacheren Lesbarkeit halber nicht immer von "Objekten und/oder Materialien" gesprochen wird. Es versteht sich, dass bei einer Erwähnung einer Messung oder Detektion eines Objekts auch immer die Messung oder Detektion eines Materials gemeint ist und andersherum.

Gemäß einer weiteren Ausführungsform ist der Spektralsensor ausgebildet, im Betriebsmodus mittels der Detektion des zweiten Spektrums unbekannte Objekte als eines der im Lernmodus gemessenen Objekte zu erkennen. Aufgrund der passenden Auswahl der Wellenlängen des zweiten Spektrums können dann im Betriebsmodus zunächst unbekannte Objekte erkannt werden. Es versteht sich, dass die unbekannten Objekte nicht exakt dieselben Objekte sind, die im Lernmodus dem Spektralsensor präsentiert wurden, sondern nur gleiche, ähnliche und/oder aus gleichem Material hergestellte Objekte sind. Beispielsweise können im Lernmodus dem Sensor zehn verschiedene Folien aus zehn verschiedenen Materialien präsentiert (und vom Spektralsensor gemessen) worden sein, wobei der Spektralsensor dann das zweite Spektrum derart auswählt, dass die zehn Folien möglichst gut voneinander unterschieden werden können. Im Betriebsmodus werden dem Spektralsensor dann weitere Folien präsentiert, die aus einem der zehn Materialien bestehen. Das Material dieser Folien kann dann von dem Spektralsensor mittels Messung im Betriebsmodus erkannt werden.

Gemäß einer weiteren Ausführungsform ist der Spektralsensor ausgebildet, für das erste Spektrum zumindest fünf Mal, bevorzugt zehn oder 50 Mal, mehr Wellenlängen zu detektieren, als für das zweite Spektrum. Auf diese Weise kann der Zeitaufwand für eine Messung im Betriebsmodus verglichen mit dem Lernmodus um den Faktor fünf, zehn oder 50 reduziert werden.

Gemäß einer weiteren Ausführungsform umfasst das zweite Spektrum lediglich zwischen drei und 15, bevorzugt zwischen vier und zehn verschiedene Wellenlängen. Die genannten Zahlenwerte gelten jeweils als eingeschlossen.

Eine Wellenlänge des ersten oder zweiten Spektrums ist so zu verstehen, dass der Spektralsensor für diese Wellenlänge als mittlere Wellenlänge eines Wellenlängenbereichs eine Messung durchführt.

Gemäß einer weiteren Ausführungsform ist der Spektralsensor ausgebildet, im Lernmodus einen Trainingsvorgang der Maschinenlerneinheit durchzuführen, wobei bei dem Trainingsvorgang eine Verlustfunktion minimiert wird, wobei die Verlustfunktion als Randbedingung umfasst, die Anzahl von Wellenlängen des zweiten Spektrums zu minimieren.

Durch den Trainingsvorgang wird die Maschinenlerneinheit an die jeweils zu erkennenden Objekte/Materialien angepasst und für deren Erkennung optimiert. Bei dem Trainingsvorgang können beispielsweise Gewichte in Knoten des künstlichen neuronalen Netzes verändert werden, um das neuronale Netz an die während des Lernmodus durchgeführten Messungen anzupassen. In dem Lernmodus werden Messungen von später im Betriebsmodus zu unterscheidenden Objekten und/oder Materialien durchgeführt, so dass die Maschinenlerneinheit dahingehend trainiert wird, im späteren Betriebsmodus diese eingelernten Objekte und/oder Materialien mit möglichst hoher Wahrscheinlichkeit korrekt zu erkennen und voneinander zu unterscheiden.

Bei dem Trainingsvorgang wird bevorzugt eine Verlustfunktion minimiert. Die Verlustfunktion kann beispielsweise angeben, wie hoch die Wahrscheinlichkeit ist, ein Objekt bzw. Material falsch zu klassifizieren. Diese Wahrscheinlichkeit soll durch den Trainingsvorgang minimiert werden. Zudem kann die Verlustfunktion als Randbedingung umfassen, die Anzahl von Wellenlängen des zweiten Spektrums zu minimieren. Durch die Minimierung der Wellenlängen des zweiten Spektrums muss der Spektralsensor im Betriebsmodus nur wenige Wellenlängen messen bzw. erfassen, wodurch die Geschwindigkeit der Erkennung des Spektralsensors im Betriebsmodus deutlich erhöht werden kann. Um die Anzahl der Wellenlängen des zweiten Spektrums zu minimieren, kann die Verlustfunktion beispielsweise einen Term umfassen, der den Einsatz einer größeren Anzahl von Wellenlängen bestraft. Durch einen solchen Term wird im Trainingsvorgang dann automatisch versucht, möglichst wenige Wellenlängen zu verwenden. Der Trainingsvorgang kann beispielsweise dann abgebrochen werden, wenn die Wahrscheinlichkeit der korrekten Zuordnung von Objekten/Materialien einen vorbestimmten Schwellenwert (beispielsweise 95% oder 99%) überschreitet. Alternativ oder zusätzlich kann der Trainingsvorgang auch abgebrochen werden, wenn in dem zweiten Spektrum lediglich noch die oben genannten Anzahlen von Wellenlängen (z.B. 3 bis 15 oder 4 bis 10 Wellenlängen) umfasst sind. Allgemein gesagt, kann der Trainingsvorgang abgebrochen werden, wenn die Anzahl der Wellenlängen des zweiten Spektrums unter einem vorgegebenen Schwellenwert liegt.

Gemäß einer weiteren Ausführungsform berücksichtigt und/oder verändert die Verlustfunktion und/oder das Training die Filterkoeffizienten des Gatingfilters. Dies bedeutet, das im Gatingfilter durchgeführte Gewichten und/oder Ausblenden von Intensitätswerten wird in dem Trainingsvorgang berücksichtigt. Das Gewichten und/oder Ausblenden kann im Training verändert werden, beispielsweise um Wellenlängen mit geringer Relevanz auszublenden. Im Trainingsvorgang kann dann über die Verlustfunktion erkannt werden, wie viele Intensitäts- und/oder Messwerte noch mit hoher Gewichtung (d.h. mit einer Gewichtung oberhalb eines vorgegebenen Schwellenwerts) noch in die Objekt-/Materialerkennung eingehen. Intensitäts- und/oder Messwerte mit einer Gewichtung unterhalb dieses Schwellenwerts können von dem Klassifikator ignoriert werden. Somit können insbesondere nur Intensitäts- und/oder Messwerte mit hoher Gewichtung berücksichtigt werden, wobei die Anzahl der Intensitäts- und/oder Messwerte mit hoher Gewichtung im Trainingsvorgang minimiert werden soll.

Gemäß einer weiteren Ausführungsform ist der Spektralsensor ausgebildet, in einer ersten Stufe des Trainingsvorgangs eine Anpassung sowohl des Klassifikators als auch des Gatingfilters vorzunehmen. In der ersten Stufe des Trainingsvorgangs können also neben dem Klassifikator auch z.B. die Filterkoeffizienten, d.h. die Gewichte des Gatingfilters, geändert werden. Bei der Anpassung des Klassifikators können Gewichte der Knoten des neuronalen Netzes angepasst werden. Bei Verwendung einer SVM kann beispielsweise die durch die SVM generierte Hyperebene zur optimierten Unterscheidung der im Lernmodus einzulernenden Objekte/Materialien angepasst werden.

Gemäß einer weiteren Ausführungsform ist der Spektralsensor ausgebildet, in einer zweiten Stufe des Trainingsvorgangs eine Anpassung des Klassifikators vorzunehmen und die Filterkoeffizienten des Gatingfilters unverändert zu belassen. Die Anpassung des Klassifikators kann dementsprechend sowohl in der ersten als auch in der zweiten Stufe des Trainingsvorgangs erfolgen, wobei die Anpassung des Gatingfilters bevorzugt nur in der ersten Stufe vorgenommen wird. In der zweiten Stufe können die Filterkoeffizienten des Gatingfilters sozusagen "eingefroren" werden. Es hat sich herausgestellt, dass durch eine solche Kombination von zwei Stufen insgesamt ein verbessertes Trainingsergebnis erzielt werden kann. In die zweite Stufe des Trainingsvorgangs kann beispielsweise gewechselt werden, wenn nur noch eine vorbestimmte Anzahl von Wellenlängen mit einem Filterkoeffizienten oberhalb eines vorbestimmten Schwellenwerts gewichtet werden, d.h. wenn nur noch wenige Wellenlängen eine Relevanz für die Objekt/Materialerkennung besitzen. Alternativ kann auch nach einer vorbestimmten Anzahl an Trainingsdurchgängen oder bei Erreichen einer vorbestimmten Wahrscheinlichkeit für eine korrekte Zuordnung von Objekten/Materialien in die zweite Stufe gewechselt werden.

Die zweite Stufe des Trainingsvorgangs kann solange durchgeführt werden, bis eine Wahrscheinlichkeit für eine korrekte Erkennung eines Objekts/Materials einen vorbestimmten Schwellenwert (z.B. 95% oder 99%) überschreitet.

Gemäß einer weiteren Ausführungsform ist der Spektralsensor ausgebildet, in einer dritten Stufe des Trainingsvorgangs die Wellenlängen des zweiten Spektrums auszuwählen. Die dritte Stufe kann nach der zweiten Stufe des Trainingsvorgangs oder auch direkt nach der ersten Stufe des Trainingsvorgangs durchgeführt werden. Insbesondere kann der Spektralsensor ausgebildet sein, diejenigen Wellenlängen als Wellenlängen des zweiten Spektrums zu bestimmen, die am Ende des Trainingsvorgangs in dem Gatingfilter mit einem Gewicht oberhalb eines vorbestimmten Schwellenwerts gewichtet werden.

Es ist auch möglich, nach der ersten, zweiten oder dritten Stufe des Trainingsvorgangs den Klassifikator automatisch oder manuell neu aufzusetzen und den Klassifikator dann nur noch mit den verbliebenen Wellenlängen bzw. mit den verbliebenen, d.h. "eingefrorenen" Filterkoeffizienten des Gatingfilters, neu zu trainieren. Auf diese Weise kann ein Klassifikator geschaffen werden, der noch besser an die vom Gatingfilter an den Klassifikator durchgeleiteten Messwerte angepasst ist.

Erfindungsgemäß ist der Spektralsensor ausgebildet, im Betriebsmodus lediglich Intensitätswerte für Wellenlängen des zweiten Spektrums zu erheben. Im Betriebsmodus wird also keine Messung von z.B. allen Wellenlängen durchgeführt. Stattdessen werden nur die Intensitätswerte für Wellenlängen des zweiten Spektrums gemessen, wodurch der Messvorgang deutlich beschleunigt werden kann. Die gemessenen Intensitätswerte des zweiten Spektrums werden dann bevorzugt dem Gatingfilter zugeführt und dort mit den im Trainingsvorgang ermittelten Gewichten gewichtet. Anschließend werden die gewichteten Werte dem Klassifikator zugeführt, welcher als Ergebnis insbesondere eine Zuordnung des gemessenen Objekts/Materials zu einem im Training trainierten Objekt/Material vornimmt. Der Gatingfilter kann dem Klassifikator für nicht gemessene Wellenlängen, d.h. nicht im zweiten Spektrum enthaltene Wellenlängen, einen Null-Wert zuleiten.

Die Zuordnung des gemessenen Objekts/Materials kann von dem Spektralsensor als Objektsignal oder Klassifikationssignal ausgegeben werden. Das ausgegebene Signal kann dann in dem Industrieprozess zur Steuerung des Industrieprozesses verwendet werden.

Gemäß einer weiteren Ausführungsform ist der Spektralsensor ausgebildet, anhand der Messung des zweiten Spektrums eine Dicke und/oder eine Feuchtigkeit des gemessenen Objekts zu bestimmen. Die Dicke und/oder die Feuchtigkeit des Objekts können insbesondere aus charakteristischen Einbrüchen (d.h. niedrigen Intensitätswerten) im gemessenen Spektrum abgeleitet werden. Zudem kann die Dicke auch im Lernmodus dem Spektralsensor mitgeteilt werden, wodurch der Spektralsensor dann in die Lage versetzt wird, aus Charakteristika des gemessenen Spektrums auf die Dicke des Objekts zurückzuschließen. Insbesondere kann es im Lernmodus ausreichen, dem Spektralsensor für nur ein erfasstes Objekt dessen Dicke mitzuteilen. Für weitere Objekte mit anderer Dicke muss keine Messung im Lernmodus erfolgen, es kann ausreichen, dem Spektralsensor weitere mögliche Dicken mitzuteilen. Im Betriebsmodus kann der Spektralsensor dann das Objekt mit der entsprechenden Dicke anhand der ihm so zur Verfügung stehenden Informationen zu identifizieren.

Allgemein kann der Spektralsensor ausgebildet sein, anhand der Messung des zweiten Spektrums in dem gemessenen Objekt einen Materialanteil eines bestimmten Materials in einem Stoffgemisch zu bestimmen. Bei dem Materialanteil kann es sich z.B. um den Anteil von Wasser und dementsprechend um die Bestimmung der Feuchtigkeit handeln. Die Bestimmung des Materialanteils von anderen Stoffen, z.B. von Kunststoffen oder organischen Anteilen, ist aber ebenfalls möglich.

Weiterhin betrifft die Erfindung ein Verfahren zur Objekterkennung durch Nahinfrarotspektroskopie gemäß Anspruch 13.

Zu dem erfindungsgemäßen Verfahren gelten die Aussagen für den erfindungsgemäßen Spektralsensor entsprechend, dies gilt insbesondere für Vorteile und Ausführungsformen.

Nachfolgend wird die Erfindung rein beispielhaft unter Bezugnahme auf die Zeichnungen beschrieben. Es zeigen:
**Fig. 1** einen Spektralsensor in schematischer Ansicht;
**Fig. 2** schematisch den Ablauf von Lernmodus und Betriebsmodus;
**Fig. 3** schematisch die Funktion von Gatingfilter und Klassifikator;
**Fig. 4** schematisch den Fortschritt eines Trainingsvorgangs;
**Fig. 5** gemessene Intensitätswerte für verschiedene Materialien und die daraus ausgewählten Wellenlängen des zweiten Spektrums.

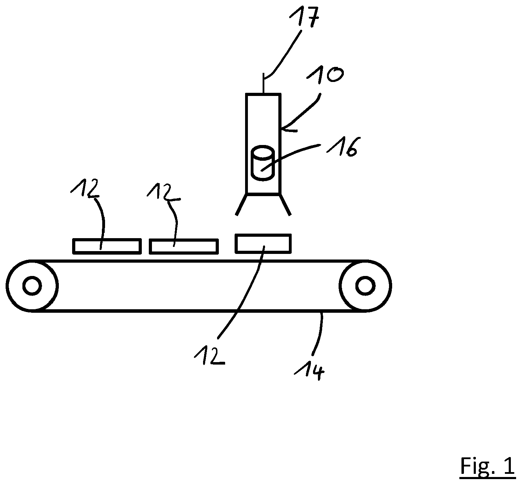

Fig. 1 zeigt einen Spektralsensor 10, welcher eine Lichtquelle zur Bestrahlung von Objekten 12 und einen Photosensor zur Auswertung des von den Objekten 12 rückgestrahlten Spektrums umfasst. Die Lichtquelle und der Photosensor sind in Fig. 1 nicht gezeigt.

Die Objekte 12 werden mittels eines Förderbands 14 innerhalb eines industriellen Prozesses bewegt und dem Spektralsensor 10 nacheinander präsentiert und vom Spektralsensor 10 gemessen.

Bei den Objekten 12 kann es sich beispielsweise um Objekte aus verschiedenen transparenten Materialien handeln, wobei die verschiedenen Materialien unterschiedliche Absorptionseigenschaften insbesondere im Nahinfrarotbereich aufweisen.

Der Spektralsensor 10 umfasst eine Rechen- und Speichereinheit 16, welche den Betrieb des Spektralsensors 10 in einem Lernmodus und in einem Betriebsmodus gestattet, wie nachfolgend ausgeführt. Die Rechen- und Speichereinheit 16 umfasst eine - nicht dargestellte - Maschinenlerneinheit, welche ein Maschinenlernverfahren ausführt. Erkannte Objekte 12 können von dem Spektralsensor 10 über eine Datenschnittstelle 17 ausgegeben werden.

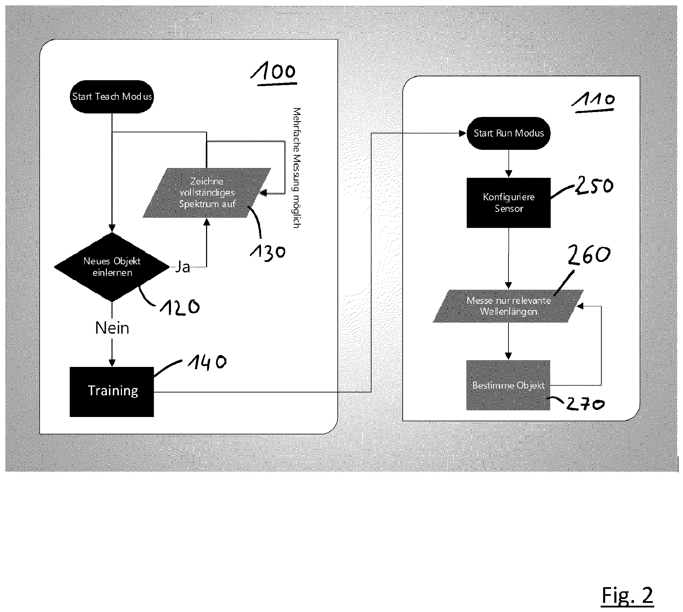

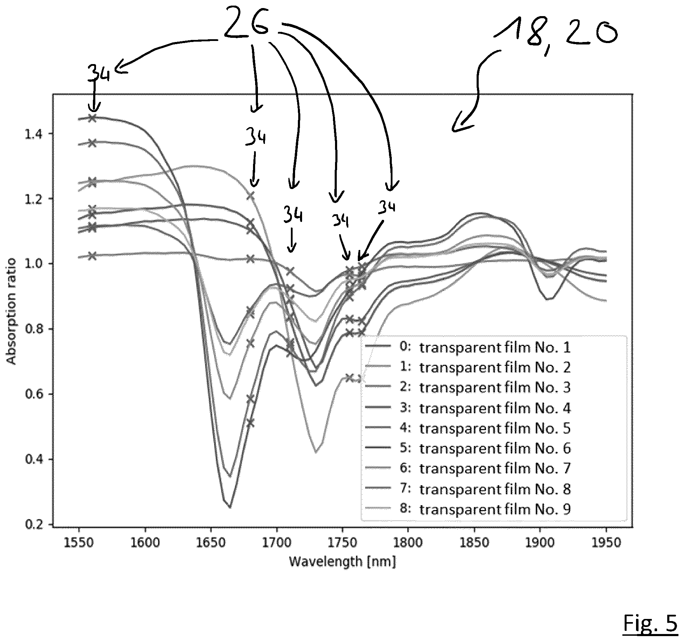

Fig. 2 zeigt die Abläufe im Lernmodus 100 und im Betriebsmodus 110. Im Lernmodus 100 wird zunächst im Schritt 120 erkannt, dass ein neues Objekt 12 eingelernt werden soll. Daraufhin wird im Schritt 130 ein vollständiges Spektrum, d.h. ein erstes Spektrum 18 (Fig. 5), mehrmals aufgezeichnet. Dieser Vorgang wird für mehrere neue Objekte 12 wiederholt, wobei die Objekte 12 im Lernmodus 100 grundsätzlich als bekannt angesehen werden.

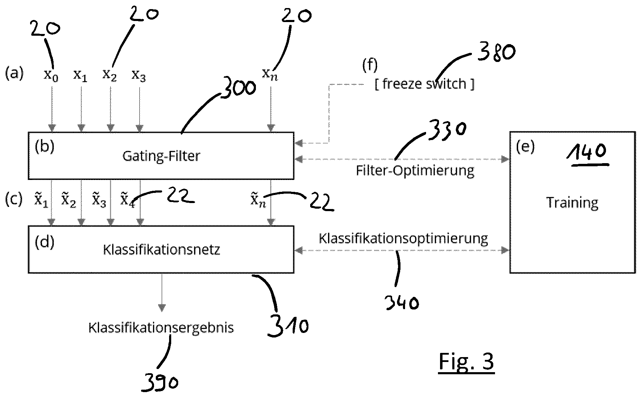

Soll kein neues Objekt 12 mehr eingelernt werden, werden im Schritt 140 die relevanten Wellenlängen, d.h. die Wellenlängen eines zweiten Spektrums 26, mittels des Maschinenlernverfahrens ausgewählt. Das Vorgehen innerhalb des Maschinenlernverfahrens wird mit Bezug auf Fig. 3 näher erläutert.

Fig. 3 zeigt die Funktion eines Gatingfilters 300 und eines Klassifikators, welcher hier als Klassifikationsnetz 310 bezeichnet ist. Das Klassifikationsnetz umfasst ein künstliches neuronales Netz.

Dem Gatingfilter 300 werden Intensitätswerte 20 von Messungen des Spektralsensors 10 zugeführt. Der Gatingfilter 300 gewichtet die Intensitätswerte 20 mit Filterkoeffizienten und leitet die gewichteten Intensitätswerte 20 als Messwerte 22 an das Klassifikationsnetz 310 weiter.

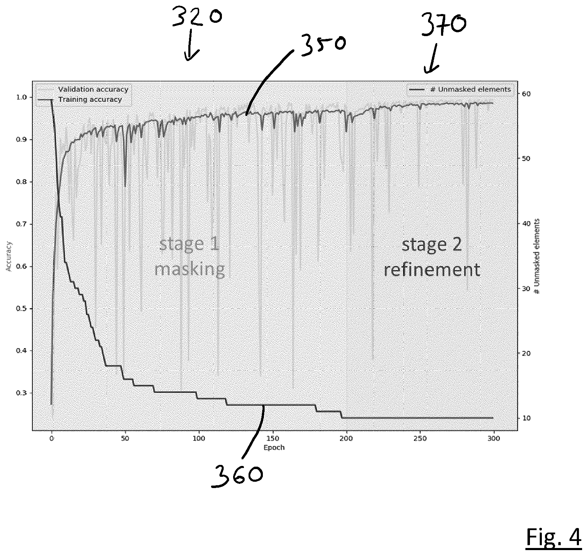

Im Lernmodus 100 wird ein Training 140 durchgeführt, welches den Gatingfilter 300 und das Klassifikationsnetz 310 an die jeweils zu erkennenden Objekte 12 und/oder Materialien anpasst. Während einer ersten Stufe 320 des Trainings 140 (siehe auch Fig. 4) werden sowohl der Gatingfilter 300 als auch das Klassifikationsnetz 310 trainiert, dies erfolgt durch eine Filteroptimierung 330 und auch durch eine Klassifikationsoptimierung 340.

Fig. 4 zeigt den Fortschritt des Trainingsvorgangs 140. Fig. 4 zeigt dabei die steigende Genauigkeit 350 (d.h. die Wahrscheinlichkeit für eine korrekte Zuordnung eines Objekts 12 und/oder eines Materials) und die Anzahl der verwendeten Wellenlängen 360. Sowohl die Genauigkeit 350 als auch die Anzahl der verwendeten Wellenlängen 360 sind gegenüber der auf der x-Achse angezeichneten Anzahl von Trainingsdurchgängen angetragen. Die Anzahl der verwendeten Wellenlängen 360 entspricht der Anzahl von Wellenlängen, welche von dem Gatingfilter 300 an das Klassifikationsnetz 310 übertragen werden (bzw. deren Gewichtung durch den Gatingfilter oberhalb eines vorbestimmten Schwellenwerts liegt).

Sobald durch das Training 140 die Anzahl der verwendeten Wellenlängen 360 unter einen vorbestimmten Schwellenwert gefallen ist, folgt die zweite Stufe des Trainings 370. Im hier beschriebenen Beispiel wird zur zweiten Stufen 370 übergegangen, sobald nur noch zehn Wellenlängen von dem Klassifikationsnetz 310 berücksichtigt werden. In der zweiten Stufe 370 wird der in Fig. 3 gezeigte "Freeze Switch" 380 aktiviert, der dazu führt, dass die Filteroptimierung 330 ausgesetzt wird und die Filterkoeffizienten des Gatingfilters 300 ab nun konstant bleiben. In der zweiten Stufe 370 wird also nur noch eine Klassifikationsoptimierung durchgeführt, bei welcher beispielsweise Gewichte innerhalb des Klassifikationsnetzes 310 verändert werden.

Überschreitet die Genauigkeit 350 in der zweiten Stufe nun einen vorbestimmten Schwellenwert, so werden nun die jeweils noch von dem Klassifikationsnetz 310 berücksichtigten Wellenlängen als ausgewählte Wellenlängen 34 (zweites Spektrum) abgespeichert. Die ausgewählten Wellenlängen 34 sind in Fig. 5 teilweise und rein beispielhaft dargestellt. Bei den ausgewählten Wellenlängen 34 handelt es sich um die Wellenlängen, die durch das Training 140 als Wellenlängen erkannt wurden, welche zur sicheren Klassifikation der verschiedenen Objekte 12 geeignet sind.

Die ausgewählten Wellenlängen 34 (d.h. das so bestimmte zweite Spektrum 26) können in der Rechen- und Speichereinheit 16 abgespeichert werden. Tritt der Spektralsensor 10 nun in den Betriebsmodus 110 ein, so erfolgt eine Konfiguration im Schritt 250 von Fig. 2, bei welcher der Spektralsensor 10 die ausgewählten Wellenlängen 34 lädt. Hierdurch ist der Spektralsensor 10 dann konfiguriert, beim Messen im Schritt 260 nur die Wellenlängen des zweiten Spektrums 26 zu messen.

Im Betriebsmodus 110 erfolgen Messungen 260 von zunächst unbekannten Objekten 12, wobei für eine auf der Messung 260 basierende Objektbestimmung 270 die beim Training 140 ermittelten Filterkoeffizienten für den Gatingfilter 300 und das entsprechend trainierte Klassifikationsnetz 310 verwendet werden. Das Klassifikationsnetz 310 gibt ein Klassifikationsergebnis 390 aus (Fig. 3), welches die Grundlage der Objektbestimmung 270 ist. Die Objektbestimmung 270 kann dann angeben, welches Objekte 12 bzw. welches Material von dem Spektralsensor 10 erkannt wurde.

Versuche haben gezeigt, dass durch ein solches Vorgehen z.B. neun verschiedene transparente Filme mit 100%-iger Sicherheit korrekt erkannt werden können.

Der Spektralsensor 10 kann daher im Betriebsmodus 110 schnell und mit geringem Messaufwand ein zuverlässiges und robustes Ergebnis über das gemessene Objekt 12 liefern.

### Bezugszeichenliste

10 Spektralsensor
12 Objekt
14 Förderband
16 Rechen- und Speichereinheit
17 Datenschnittstelle
18 erstes Spektrum
20 Intensitätswerte
22 Messwerte
26 zweites Spektrum
34 ausgewählte Wellenlänge
100 Lernmodus
110 Betriebsmodus
120 neues Objekt ein lernen
130 erstes Spektrum messen
140 Training
250 Konfiguration
260 Messung
270 Objektbestimmung
300 Gatingfilter
310 Klassifikationsnetz
320 erste Stufe des Trainings
330 Filter-Optimierung
340 Klassifikationsoptimierung
350 Genauigkeit
360 Anzahl der verwendeten Wellenlängen
370 zweite Stufe des Trainings
380 Freeze Switch
390 Klassifikationsergebnis

## Patentansprüche

1. Spektralsensor (10) für die Nahinfrarotspektroskopie, welcher zur Unterscheidung und/oder Erkennung von Objekten (12) und/oder Materialien dient, wobei der Spektralsensor (10) eine Recheneinrichtung, einen Photosensor und eine Lichtquelle oder mehrere Lichtquellen zur Beleuchtung des zu messenden Objekts und/oder Materials umfasst, wobei der Spektralsensor (10) ausgebildet ist, in einem Lernmodus (100) zu arbeiten, wobei der Spektralsensor (10) ausgebildet ist, in dem Lernmodus (100) ein oder mehrere Messungen von Intensitätswerten (20) eines ersten Spektrums (18) von Wellenlängen durchzuführen,
wobei der Spektralsensor (10) ausgebildet ist, selbst die Wellenlängen eines zweiten Spektrums (26) zu bestimmen, wobei das zweite Spektrum (26) vollständig in dem ersten Spektrum (18) enthalten ist aber weniger Wellenlängen umfasst, als das erste Spektrum, wobei der Spektralsensor (10) ausgebildet ist, die Wellenlängen des zweiten Spektrums (26) unter Zuhilfenahme eines Maschinenlernverfahrens auszuwählen,
**dadurch gekennzeichnet, dass**
der Spektralsensor (10) ausgebildet ist, in einem Betriebsmodus (110) zu arbeiten und in dem Betriebsmodus (110) zumindest eine Messung von Intensitätswerten (20) des zweiten Spektrums (26) von Wellenlängen durchzuführen, wobei der Spektralsensor (10) ausgebildet ist, im Betriebsmodus (110) lediglich Intensitätswerte (20) für Wellenlängen (34) des zweiten Spektrums (26) zu erheben, wobei die Recheneinrichtung den Lernmodus und den Betriebsmodus ermöglicht.

2. Spektralsensor (10) nach Anspruch 1,
wobei der Spektralsensor (10) eine Maschinenlerneinheit umfasst und ausgebildet ist, das Maschinenlernverfahrens mittels der Maschinenlerneinheit durchzuführen.

3. Spektralsensor (10) nach Anspruch 2,
wobei die Maschinenlerneinheit einen Klassifikator (310) aufweist, wobei der Klassifikator (310) bevorzugt ein Neuronales Netz und/oder eine Support Vector Machine umfasst.

4. Spektralsensor (10) nach Anspruch 2 oder 3,
wobei die Maschinenlerneinheit einen Gatingfilter (300) aufweist, welcher die Messungen von Intensitätswerten (20) als Messwerte (22) an den Klassifikator (310) weiterleitet, wobei vor dem Weiterleiten ein Gewichten und/oder Ausblenden von Intensitätswerten (20) durch Filterkoeffizienten des Gatingfilters (300) erfolgt.

5. Spektralsensor (10) nach einem der vorstehenden Ansprüche,
wobei der Spektralsensor (10) ausgebildet ist, im Lernmodus (100) bekannte Objekte (12) zu messen und aus den Messungen der bekannten Objekte (12) das zweite Spektrum (26) zu bestimmen,
wobei der Spektralsensor (10) ausgebildet ist, im Betriebsmodus (110) mittels der Detektion des zweiten Spektrums (26) unbekannte Objekte (12) als eines der im Lernmodus (100) gemessenen Objekte (12) zu erkennen.

6. Spektralsensor (10) nach einem der vorstehenden Ansprüche,
wobei der Spektralsensor (10) ausgebildet ist, für das erste Spektrum (18) zumindest 5 Mal, bevorzugt 10 oder 50 Mal, mehr Wellenlängen zu detektieren, als für das zweite Spektrum (26) und/oder
wobei das zweite Spektrum (26) lediglich zwischen 3 und 15, bevorzugt zwischen 4 und 10 verschiedene Wellenlängen umfasst.

7. Spektralsensor (10) nach einem der Ansprüche 2 bis 6,
wobei der Spektralsensor (10) ausgebildet ist, im Lernmodus (100) einen Trainingsvorgang (140) der Maschinenlerneinheit durchzuführen, wobei bei dem Trainingsvorgang (140) eine Verlustfunktion minimiert wird, wobei die Verlustfunktion als Randbedingung umfasst, die Anzahl von Wellenlängen (34) des zweiten Spektrums (26) zu minimieren.

8. Spektralsensor (10) nach zumindest den Ansprüchen 4 und 7,
wobei die Verlustfunktion die Filterkoeffizienten des Gatingfilters (300) berücksichtigt und/oder verändert.

9. Spektralsensor (10) nach den Ansprüchen 7 oder 8,
wobei der Spektralsensor (10) ausgebildet ist, in einer ersten Stufe (320) des Trainingsvorgangs eine Anpassung sowohl des Klassifikators (310) als auch des Gatingfilters (300) vorzunehmen.

10. Spektralsensor (10) nach den Ansprüchen 7, 8 oder 9,
wobei der Spektralsensor (10) ausgebildet ist, in einer zweiten Stufe (370) des Trainingsvorgangs eine Anpassung des Klassifikators (310) vorzunehmen und die Filterkoeffizienten des Gatingfilters (300) unverändert zu belassen.

11. Spektralsensor (10) nach den Ansprüchen 7, 8, 9 oder 10,
wobei der Spektralsensor (10) ausgebildet ist, in einer dritten Stufe des Trainingsvorgangs die Wellenlängen (34) des zweiten Spektrums (26) auszuwählen.

12. Spektralsensor (10) nach einem der vorstehenden Ansprüche,
wobei der Spektralsensor (10) ausgebildet ist, anhand der Messung des zweiten Spektrums (26) eine Dicke und/oder eine Feuchtigkeit des gemessenen Objekts (12) zu bestimmen.

13. Verfahren zur Objekterkennung durch Nahinfrarotspektroskopie mittels eines Spektralsensors (10), wobei
- der Spektralsensor (10) in einem Lernmodus (100) ein oder mehrere Messungen von Intensitätswerten (20) eines ersten Spektrums (18) von Wellenlängen durchführt,
wobei der Spektralsensor (10) selbst die Wellenlängen eines zweiten Spektrums (26) unter Zuhilfenahme eines Maschinenlernverfahrens auswählt, wobei das zweite Spektrum (26) vollständig in dem ersten Spektrum (18) enthalten ist aber weniger Wellenlängen umfasst, als das erste Spektrum (18),
**dadurch gekennzeichnet, dass**
- der Spektralsensor (10) in einem Betriebsmodus (110) zumindest eine Messung von Intensitätswerten (20) des zweiten Spektrums (26) von Wellenlängen durchführt, wobei der Spektralsensor (10) im Betriebsmodus (110) lediglich Intensitätswerte (20) für Wellenlängen (34) des zweiten Spektrums (26) erhebt.

## Claims

1. A spectral sensor (10) for near-infrared spectroscopy, which is used for distinguishing and/or recognizing objects (12) and/or materials, wherein the spectral sensor (10) comprises a computing device, a photosensor and a light source or a plurality of light sources for illuminating the object and/or material to be measured, wherein the spectral sensor (10) is configured to operate in a learning mode (100), wherein the spectral sensor (10) is configured to perform one or more measurements of intensity values (20) of a first spectrum (18) of wavelengths in the learning mode (100),
wherein the spectral sensor (10) is configured to determine the wavelengths of a second spectrum (26) itself, wherein the second spectrum (26) is fully included in the first spectrum (18) but comprises fewer wavelengths than the first spectrum, wherein the spectral sensor (10) is configured to select the wavelengths of the second spectrum (26) with the aid of a machine learning method,
**characterized in that**
the spectral sensor (10) is configured to operate in an operating mode (110) and to carry out at least one measurement of intensity values (20) of the second spectrum (26) of wavelengths in the operating mode (110), with the spectral sensor (10) being configured to collect only intensity values (20) for wavelengths (34) of the second spectrum (26) in the operating mode (110), with the computing device enabling the learning mode and the operating mode.

2. A spectral sensor (10) according to claim 1,
wherein the spectral sensor (10) comprises a machine learning unit and is configured to perform the machine learning method by means of the machine learning unit.

3. A spectral sensor (10) according to claim 2,
wherein the machine learning unit has a classifier (310), wherein the classifier (310) preferably comprises a neural network and/or a support vector machine.

4. A spectral sensor (10) according to claim 2 or 3,
wherein the machine learning unit has a gating filter (300) which forwards the measurements of intensity values (20) as measured values (22) to the classifier (310), wherein a weighting and/or masking of intensity values (20) by filter coefficients of the gating filter (300) takes place before the forwarding.

5. A spectral sensor (10) according to any one of the preceding claims,
wherein the spectral sensor (10) is configured to measure known objects (12) in the learning mode (100) and to determine the second spectrum (26) from the measurements of the known objects (12),
wherein the spectral sensor (10) is configured to recognize, by means of the detection of the second spectrum (26), unknown objects (12) in the operating mode (110) as one of the objects (12) measured in the learning mode (100).

6. A spectral sensor (10) according to any one of the preceding claims,
wherein the spectral sensor (10) is configured to detect at least 5 times, preferably 10 or 50 times, more wavelengths for the first spectrum (18) than for the second spectrum (26), and/or
wherein the second spectrum (26) comprises only between 3 and 15, preferably between 4 and 10, different wavelengths.

7. A spectral sensor (10) according to any one of the claims 2 to 6,
wherein the spectral sensor (10) is configured to perform a training process (140) of the machine learning unit in the learning mode (100), wherein a loss function is minimized in the training process (140), wherein the loss function comprises, as a boundary condition, minimizing the number of wavelengths (34) of the second spectrum (26).

8. A spectral sensor (10) according to at least one of the claims 4 and 7, wherein the loss function considers and/or modifies the filter coefficients of the gating filter (300).

9. A spectral sensor (10) according to claim 7 or 8,
wherein the spectral sensor (10) is configured to perform an adaptation of both the classifier (310) and the gating filter (300) in a first stage (320) of the training process.

10. A spectral sensor (10) according to claims 7, 8 or 9,
wherein the spectral sensor (10) is configured to perform an adaptation of the classifier (310) in a second stage (370) of the training process and to leave the filter coefficients of the gating filter (300) unchanged.

11. A spectral sensor (10) according to claims 7, 8, 9 or 10,
wherein the spectral sensor (10) is configured to select the wavelengths (34) of the second spectrum (26) in a third stage of the training process.

12. A spectral sensor (10) according to any one of the preceding claims, wherein the spectral sensor (10) is configured to determine a thickness and/or a moisture of the measured object (12) based on the measurement of the second spectrum (26).

13. A method for object recognition by near-infrared spectroscopy by means of a spectral sensor (10), wherein
- the spectral sensor (10) performs one or more measurements of intensity values (20) of a first spectrum (18) of wavelengths in a learning mode (100), wherein the spectral sensor (10) itself selects the wavelengths of a second spectrum (26) with the aid of a machine learning method, wherein the second spectrum (26) is fully included in the first spectrum (18) but comprises fewer wavelengths than the first spectrum (18),
**characterized in that**
- the spectral sensor (10) performs at least one measurement of intensity values (20) of the second spectrum (26) of wavelengths in an operating mode (110), wherein the spectral sensor (10) only collects intensity values (20) for wavelengths (34) of the second spectrum (26) in the operating mode (110).

## Revendications

1. Capteur spectral (10) pour la spectroscopie proche infrarouge, qui sert à distinguer et/ou à reconnaître des objets (12) et/ou des matériaux, le capteur spectral (10) comprenant une unité de calcul, un photocapteur et une source de lumière ou plusieurs sources de lumière pour éclairer l'objet et/ou le matériau à mesurer, le capteur spectral (10) étant conçu pour travailler dans un mode d'apprentissage (100), le capteur spectral (10) étant conçu pour effectuer, en mode d'apprentissage (100), une ou plusieurs mesures de valeurs d'intensité (20) d'un premier spectre (18) de longueurs d'onde, le capteur spectral (10) étant conçu pour déterminer lui-même les longueurs d'onde d'un deuxième spectre (26), le deuxième spectre (26) étant entièrement contenu dans le premier spectre (18) mais comprenant moins de longueurs d'onde que le premier spectre, le capteur spectral (10) étant conçu pour sélectionner les longueurs d'onde du deuxième spectre (26) à l'aide d'un procédé d'apprentissage automatique,
**caractérisé en ce que**
le capteur spectral (10) est conçu pour travailler dans un mode de fonctionnement (110) et pour effectuer, en mode de fonctionnement (110), au moins une mesure de valeurs d'intensité (20) du deuxième spectre (26) de longueurs d'onde, le capteur spectral (10) étant conçu pour collecter, en mode de fonctionnement (110), uniquement des valeurs d'intensité (20) pour des longueurs d'onde (34) du deuxième spectre (26), le dispositif de calcul permettant le mode d'apprentissage et le mode de fonctionnement.

2. Capteur spectral (10) selon la revendication 1,
dans lequel le capteur spectral (10) comprend une unité d'apprentissage automatique et est conçu pour mettre en oeuvre le procédé d'apprentissage automatique au moyen de l'unité d'apprentissage automatique.

3. Capteur spectral (10) selon la revendication 2,
dans lequel l'unité d'apprentissage automatique comprend un classifieur (310), le classifieur (310) présentant de préférence un réseau neuronal et/ou une machine à vecteurs de support.

4. Capteur spectral (10) selon la revendication 2 ou 3,
dans lequel l'unité d'apprentissage automatique présente un filtre formant porte (300) qui transmet au classifieur (310) les mesures de valeurs d'intensité (20) en tant que valeurs de mesure (22), une pondération et/ou un masquage de valeurs d'intensité (20) par des coefficients de filtrage du filtre formant porte (300) étant effectués avant la transmission.

5. Capteur spectral (10) selon l'une des revendications précédentes,
dans lequel, en mode d'apprentissage (100), le capteur spectral (10) est conçu pour mesurer des objets connus (12) et pour déterminer le deuxième spectre (26) à partir des mesures des objets connus (12), et
en mode de fonctionnement (110), le capteur spectral (10) est conçu pour reconnaître, à l'aide de la détection du deuxième spectre (26), des objets inconnus (12) comme l'un des objets (12) mesurés en mode d'apprentissage (100).

6. Capteur spectral (10) selon l'une des revendications précédentes,
le capteur spectral (10) étant conçu pour détecter au moins 5 fois, de préférence 10 ou 50 fois, plus de longueurs d'onde pour le premier spectre (18) que pour le deuxième spectre (26), et/ou
le deuxième spectre (26) comprend seulement 3 à 15, de préférence 4 à 10 longueurs d'onde différentes.

7. Capteur spectral (10) selon l'une des revendications 2 à 6,
le capteur spectral (10) étant conçu pour exécuter, en mode d'apprentissage (100), un processus d'entraînement (140) de l'unité d'apprentissage automatique, une fonction de perte étant minimisée lors du processus d'entraînement (140), la fonction de perte comprenant comme condition limite de minimiser le nombre de longueurs d'onde (34) du deuxième spectre (26).

8. Capteur spectral (10) selon l'une au moins des revendications 4 et 7, dans lequel la fonction de perte prend en compte et/ou change les coefficients de filtrage du filtre formant porte (300).

9. Capteur spectral (10) selon les revendications 7 ou 8,
le capteur spectral (10) étant conçu pour procéder à une adaptation aussi bien du classifieur (310) que du filtre formant porte (300), dans une première étape (320) du processus d'entraînement.

10. Capteur spectral (10) selon les revendications 7, 8 ou 9,
le capteur spectral (10) étant conçu pour procéder à une adaptation du classifieur (310) et pour laisser inchangés les coefficients de filtrage du filtre formant porte (300), dans une deuxième étape (370) du processus d'entraînement.

11. Capteur spectral (10) selon les revendications 7, 8, 9 ou 10,
le capteur spectral (10) étant conçu pour sélectionner les longueurs d'onde (34) du deuxième spectre (26), dans une troisième étape du processus d'entraînement.

12. Capteur spectral (10) selon l'une des revendications précédentes,
le capteur spectral (10) étant conçu pour déterminer, à l'aide de la mesure du deuxième spectre (26), une épaisseur et/ou une humidité de l'objet (12) mesuré.

13. Procédé de reconnaissance d'objets par spectroscopie proche infrarouge au moyen d'un capteur spectral (10), dans lequel
- dans un mode d'apprentissage (100), le capteur spectral (10) effectue une ou plusieurs mesures de valeurs d'intensité (20) d'un premier spectre (18) de longueurs d'onde,
le capteur spectral (10) sélectionnant lui-même les longueurs d'onde du deuxième spectre (26) à l'aide d'un procédé d'apprentissage automatique, le deuxième spectre (26) étant entièrement contenu dans le premier spectre (18) mais comprenant moins de longueurs d'onde que le premier spectre (18),
**caractérisé en ce que**
- dans un mode de fonctionnement (110), le capteur spectral (10) effectue au moins une mesure de valeurs d'intensité (20) du deuxième spectre (26) de longueurs d'onde, et, en mode de fonctionnement (110), le capteur spectral (10) collecte uniquement des valeurs d'intensité (20) pour des longueurs d'onde (34) du deuxième spectre (26).
